# EUROPEAN PATENT APPLICATION

(11) **EP 4 067 874 A1**
(43) Date of publication of application: **05.10.2022**
(21) Application number: 22165110.2
(22) Date of filing: 29.03.2022
(51) Int. Cl.: G01N 21/3581, G01N 21/552

(54) **TERAHERTZ SPECTROSCOPY APPARATUS AND MEASUREMENT METHOD**

(30) Priority: 30.03.2021 JP 2021058301
(71) Applicant: Yokogawa Electric Corporation, Musashino-shi, Tokyo 180-8750 (JP)
(72) Inventor: OKADA, Syuhei, Tokyo, 1808750 (JP)
(74) Representative: Zimmermann, Tankred Klaus

(57) **Abstract**

A measurement apparatus (10) is for measuring the state of a measurement target (M) that exhibits anomalous dispersion. The measurement apparatus (10) includes a controller (116) that acquires information on a spectroscopic spectrum of the measurement target (M), the spectroscopic spectrum being based on electromagnetic waves that are irradiated on the measurement target (M) and including a first frequency domain in which an effect of anomalous dispersion is observed and a second frequency domain adjacent to the first frequency domain. The controller (116) calculates a state of the measurement target (M) based on the acquired information on the spectroscopic spectrum.

## Description

### CROSS-REFERENCE TO RELATED APPLICATION

The present application claims priority to Japanese Patent Application No. 2021-058301 filed on March 30, 2021, the entire contents of which are incorporated herein by reference.

### TECHNICAL FIELD

The present disclosure relates to a measurement apparatus and a measurement method.

### BACKGROUND

Technology for non-destructive measurement of the state of a measurement target near the interface of the measurement target is known.

For example, patent literature (PTL) 1 discloses a system for determining the characteristics of a boundary surface between a first layer and a second layer. Such a system includes a transmitter that outputs electromagnetic radiation to a sample, a receiver that receives electromagnetic radiation reflected by or transmitted through the sample, and a data collection device. The system determines material characteristics, including the adhesion strength between the first layer and the second layer, based on waveform data representing the electromagnetic radiation reflected by or transmitted through the sample.

### CITATION LIST

### Patent Literature

PTL 1: JP 5684819 B2

### SUMMARY

Such technology is effective after a physical defect or damage has occurred but has trouble accurately measuring the state of the measurement target with high signal strength before a physical defect or the like occurs.

It would be helpful to provide a measurement apparatus and a measurement method capable of accurately measuring the state of a measurement target.

A measurement apparatus according to an embodiment is a measuring apparatus for measuring a state of a measurement target that exhibits anomalous dispersion, the measurement apparatus including a controller configured to acquire information on a spectroscopic spectrum of the measurement target, the spectroscopic spectrum being based on electromagnetic waves that are irradiated on the measurement target and including a first frequency domain in which an effect of anomalous dispersion is observed and a second frequency domain adjacent to the first frequency domain, and calculate a state of the measurement target based on the acquired information on the spectroscopic spectrum.

This configuration enables accurate measurement of the state of the measurement target. For example, by acquiring information on a spectroscopic spectrum that includes a first frequency domain in which the effect of anomalous dispersion is observed and a second frequency domain adjacent to the first frequency domain, the measurement apparatus can acquire a spectroscopic spectrum with shapes of different characteristics in each frequency domain. Additionally, the shape of the spectroscopic spectrum in each frequency domain changes according to the state of the measurement target. Therefore, the measurement apparatus can accurately measure the state of the measurement target based on the spectroscopic spectrum of a measurement target that includes such a mixed spectrum.

In the measurement apparatus of an embodiment, the controller may calculate the state of the measurement target by executing a fitting calculation process on the acquired spectroscopic spectrum based on reference data necessary for calculating the state of the measurement target and an initial value of the state of the measurement target.

This configuration enables the controller to accurately calculate the state of the measurement target that best matches the shape of the acquired spectroscopic spectrum. In other words, the controller can accurately calculate the state of the measurement target that has the least error with respect to the shape of the acquired spectroscopic spectrum.

In the measurement apparatus of an embodiment, the controller may, in the fitting calculation process, identify a type of foreign substance that is mixed in the measurement target. This configuration enables the measurement apparatus to accurately measure the state of the measurement target even if it were the case that the user cannot identify the type of foreign substance mixed in the measurement target. In addition, the user can easily understand the type of foreign substance mixed in the measurement target based on the results of the fitting calculation process by the measurement apparatus.

In the measurement apparatus of an embodiment, the controller may calculate the state of the measurement target by identifying a frequency threshold included in a boundary region between the first frequency domain and the second frequency domain in the acquired spectroscopic spectrum.

This configuration enables the measurement apparatus 10 to measure the state of the measurement target easily by simplifying the calculation process. For example, the flow of the calculation process using the frequency threshold has fewer steps than the flow of the fitting calculation process. This enables the measurement apparatus to reduce the time required for the calculation process. As a result, the convenience for users of the measurement apparatus improves.

In the measurement apparatus of an embodiment, the frequency threshold may include a value of a frequency at which a predetermined intensity decay from a peak signal intensity is obtained in the spectroscopic spectrum. This enables the measurement apparatus 10 to identify such a frequency threshold accurately.

In the measurement apparatus of an embodiment, the controller may calculate the state of the measurement target by identifying a signal intensity difference in a specific frequency domain extending from the first frequency domain to the second frequency domain in the acquired spectroscopic spectrum.

This configuration enables the measurement apparatus 10 to measure the state of the measurement target easily by simplifying the calculation process. For example, the flow of the calculation process using the signal intensity difference in a specific frequency domain has fewer steps than the flow of the fitting calculation process. This enables the measurement apparatus to reduce the time required for the calculation process. As a result, the convenience for users of the measurement apparatus improves.

In the measurement apparatus of an embodiment, the controller may, in calculating the state of the measurement target, calculate frequency characteristics of a refractive index of the measurement target. This configuration enables the measurement apparatus to accurately calculate the frequency characteristics of the refractive index of the measurement target corresponding to the shape of the acquired spectroscopic spectrum. For example, the user can easily understand the frequency characteristics of the refractive index of the measurement target based on the results of the fitting calculation process by the measurement apparatus.

In the measurement apparatus of an embodiment, the controller may, in calculating the state of the measurement target, further calculate frequency characteristics of an absorption coefficient of the measurement target. This configuration enables the measurement apparatus to accurately calculate the frequency characteristics of the absorption coefficient of the measurement target corresponding to the shape of the acquired spectroscopic spectrum. For example, the user can easily understand the frequency characteristics of the absorption coefficient of the measurement target based on the results of the fitting calculation process by the measurement apparatus.

In the measurement apparatus of an embodiment, the spectroscopic spectrum may include an ATR spectrum, due to total reflection, obtained in the first frequency domain and a reflection spectrum obtained in the second frequency domain.

This configuration increases the reflection intensity at the interface of the measurement target. For example, as a result of the measurement target exhibiting anomalous dispersion, a first frequency domain in which the refractive index difference between the inside and outside at the interface of the measurement target increases is obtained. Due to this increase in the refractive index difference, the reflection intensity at the interface of the measurement target increases. The reflection intensity also increases due to the electromagnetic waves being incident on the interface of the measurement target at the critical angle or higher. For these reasons, the signal strength of the detection signal increases. This enables the controller of the measurement apparatus to accurately calculate the state of the measurement target based on a spectroscopic spectrum with sufficient signal intensity.

In the measurement apparatus of an embodiment, the measurement target may include an adhesive that adheres a first adherend to a second adherend, the state of the measurement target may include a contamination rate of a foreign substance in the adhesive, and the measurement apparatus may further include a generator configured to irradiate the electromagnetic waves having a frequency within a terahertz region on the adhesive.

This configuration enables the measurement apparatus to accurately measure the contamination rate of the foreign substance relative to the adhesive sandwiched between the first and second adherends. Generally, when a foreign substance, including water, silicone, and fluorinated compounds, enters the adhesive interface, the bond between the adherend and the adhesive is irreversibly broken, and the adhesive strength of the adhesive is reduced. Therefore, the user can view a terminal apparatus to monitor the contamination rate, measured using the measurement apparatus, of the foreign substance relative to the adhesive and can take measures to control the contamination by the foreign substance as necessary before defects such as reduced adhesive strength occur.

A measurement method according to an embodiment is a measurement method used to measure a state of a measurement target that exhibits anomalous dispersion, the measurement method including irradiating electromagnetic waves on the measurement target; acquiring information on a spectroscopic spectrum of the measurement target, the spectroscopic spectrum being based on the irradiated electromagnetic waves and including a first frequency domain in which an effect of anomalous dispersion is observed and a second frequency domain adjacent to the first frequency domain; and calculating a state of the measurement target based on the acquired information on the spectroscopic spectrum.

This configuration enables accurate measurement of the state of the measurement target. For example, by acquisition of information on a spectroscopic spectrum that includes a first frequency domain in which the effect of anomalous dispersion is observed and a second frequency domain adjacent to the first frequency domain, a spectroscopic spectrum with shapes of different characteristics in each frequency domain can be acquired. Additionally, the shape of the spectroscopic spectrum in each frequency domain changes according to the state of the measurement target. Therefore, the state of the measurement target can be accurately measured based on the spectroscopic spectrum of a measurement target that includes such a mixed spectrum.

The measurement method of an embodiment may further include acquiring reference data necessary for calculating the state of the measurement target, and in the calculating of the state of the measurement target, a fitting calculation process may be executed on the acquired spectroscopic spectrum based on the acquired reference data and an initial value of the state of the measurement target.

This configuration enables accurate calculation of the state of the measurement target that best matches the shape of the acquired spectroscopic spectrum. In other words, the state of the measurement target that has the least error with respect to the shape of the acquired spectroscopic spectrum can be accurately calculated.

In the measurement method of an embodiment, in the calculating of the state of the measurement target, a frequency threshold included in a boundary region between the first frequency domain and the second frequency domain in the acquired spectroscopic spectrum may be identified.

This configuration enables measurement of the state of the measurement target easily by simplifying the calculation process. For example, the flow of the calculation process using the frequency threshold has fewer steps than the flow of the fitting calculation process. The time required for the calculation process is thereby reduced. This improves user convenience.

In the measurement method of an embodiment, in the calculating of the state of the measurement target, a signal intensity difference in a specific frequency domain extending from the first frequency domain to the second frequency domain in the acquired spectroscopic spectrum is identified.

This configuration enables measurement of the state of the measurement target easily by simplifying the calculation process. For example, the flow of the calculation process using the signal intensity difference in a specific frequency domain has fewer steps than the flow of the fitting calculation process. The time required for the calculation process is thereby reduced. This improves user convenience.

According to the present disclosure, a measurement apparatus and a measurement method capable of accurately measuring the state of a measurement target can be provided.

### BRIEF DESCRIPTION OF THE DRAWINGS

In the accompanying drawings:
FIG. 1 is a schematic diagram illustrating the configuration of a measurement system including a measurement apparatus according to a first embodiment of the present disclosure;
FIG. 2 is a graph illustrating an example of the frequency characteristics of the refractive index and the frequency characteristics of the absorption coefficient of a first adherend;
FIG. 3 is a graph illustrating an example of the frequency characteristics of the refractive index and the frequency characteristics of the absorption coefficient of a foreign substance;
FIG. 4A is a graph that, for each contamination rate of a foreign substance, illustrates an example of the frequency characteristics of the refractive index of a measurement target for which anomalous dispersion is observed;
FIG. 4B is a graph that, for each contamination rate of a foreign substance, illustrates an example of the frequency characteristics of the absorption coefficient of a measurement target for which anomalous dispersion is observed;
FIG. 5 is a graph illustrating an example of a simulation of the spectroscopic spectrum of a measurement target obtained based on the frequency characteristics of the refractive index in FIG. 4A and the frequency characteristics of the absorption coefficient in FIG. 4B;
FIG. 6 is a flowchart illustrating a first example of operations of the measurement apparatus in FIG. 1;
FIG. 7 is a flowchart illustrating a second example of operations of the measurement apparatus in FIG. 1;
FIG. 8 is a first graph corresponding to FIG. 5 for use in a comparison with the present disclosure;
FIG. 9 is a second graph corresponding to FIG. 5 for use in a comparison with the present disclosure;
FIG. 10 is a graph illustrating an example of a simulation of the spectroscopic spectrum of a measurement target obtained based only on the frequency characteristics of the refractive index in FIG. 4A;
FIG. 11 is a flowchart illustrating a first example of operations of a measurement apparatus according to a second embodiment of the present disclosure;
FIG. 12 is a flowchart illustrating a second example of operations of the measurement apparatus according to the second embodiment of the present disclosure;
FIG. 13 is a flowchart illustrating a first example of operations of a measurement apparatus according to a third embodiment of the present disclosure; and
FIG. 14 is a flowchart illustrating a second example of operations of the measurement apparatus according to the third embodiment of the present disclosure.

### DETAILED DESCRIPTION

Embodiments of the present disclosure are mainly described below with reference to the drawings.

### (First Embodiment)

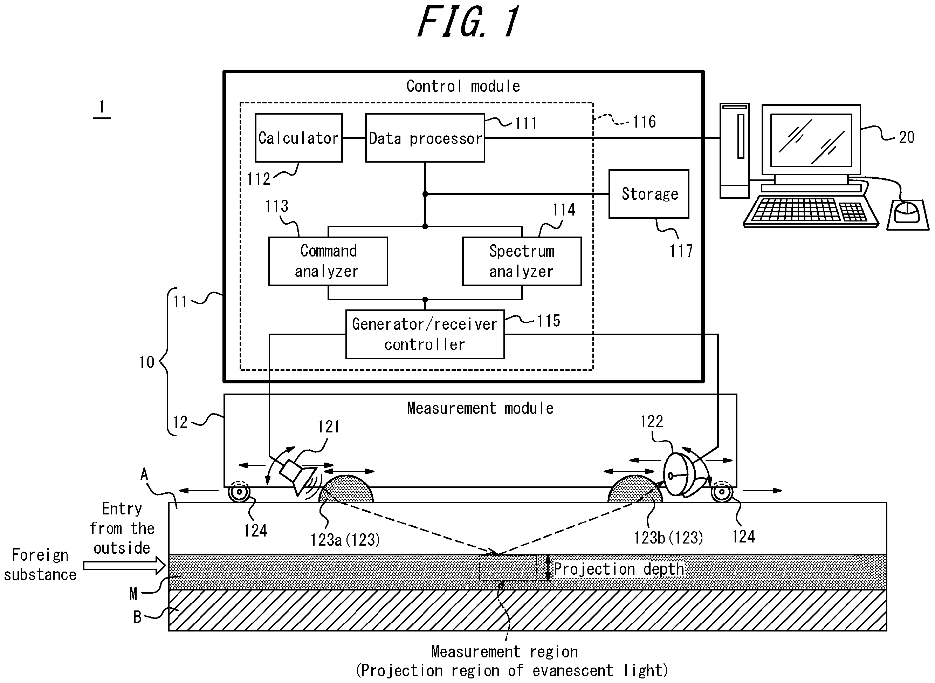

FIG. 1 is a schematic diagram illustrating the configuration of a measurement system 1 including a measurement apparatus 10 according to a first embodiment of the present disclosure. The measurement apparatus 10 measures the state of a measurement target M that exhibits anomalous dispersion. In the present embodiment, the "measurement target M" includes, for example, an adhesive that bonds a first adherend A to a second adherend B. In the present embodiment, "the state of the measurement target M" includes, for example, the contamination rate of a foreign substance in the adhesive. In the present embodiment, the "foreign substance" includes, for example, water, silicone, and fluorinated compounds.

For example, the material of the measurement target M is intentionally doped with an additive that forces the generation of anomalous dispersion. The additive forces the generation of anomalous dispersion as a marker, for example. Such an additive includes, for example, any additive that does not affect the adhesive function of the measurement target M as an adhesive. Such an additive is used to generate anomalous dispersion, which is necessary for the measurement, in the measurement target M and is formed by a substance different from foreign substances that are unintentionally mixed in. For example, the additive includes calcium carbonate.

Even if doping with the additive is not done intentionally for the purpose of generating anomalous dispersion, the measurement target M may have already been doped with the additive for the purpose of functional enhancement. As long as anomalous dispersion is thereby generated in a desired frequency domain in this measurement target M, measurement may be performed using this frequency domain.

For example, any appropriate material design simulation may be used to determine the type of measurement target M to be measured, the type of additive, the mixing ratio thereof, and the like. The user can use such a material design simulation to easily determine the material conditions necessary for obtaining the desired spectroscopic spectrum, described below.

In addition to the measurement apparatus 10, the measurement system 1 includes a terminal apparatus 20 communicably connected to the measurement apparatus 10. The measurement apparatus 10 includes a control module 11 and a measurement module 12.

The terminal apparatus 20 includes any general purpose electronic device, such as a personal computer (PC) or a smartphone. These examples are not limiting, however, and the terminal apparatus 20 may be one server apparatus or a plurality of server apparatuses that can communicate with each other, or any other electronic device dedicated to the measurement system 1.

The measurement module 12 includes a module that measures the state of the measurement target M using electromagnetic waves. The measurement module 12 includes a generator 121, a receiver 122, an adjuster 123, and tires 124.

The generator 121 includes any appropriate electromagnetic wave source capable of irradiating electromagnetic waves having a frequency within the terahertz region on the measurement target M. The receiver 122 includes any receiver capable of receiving electromagnetic waves, in the terahertz band, that are based on the electromagnetic waves irradiated on the measurement target M by the generator 121 and that include information on the spectroscopic spectrum of the measurement target M.

In the present embodiment, the "spectroscopic spectrum" includes, for example, an ATR spectrum due to total reflection at the interface between the first adherend A and the measurement target M and a reflection spectrum. The "reflection spectrum" includes, for example, the spectrum obtained when total reflection of electromagnetic waves does not occur at the interface between the first adherend A and the measurement target M. The "ATR spectrum" includes, for example, the spectrum obtained when total reflection of electromagnetic waves occurs at the interface between the first adherend A and the measurement target M. The ATR spectrum due to such total reflection is obtained in the first frequency domain where the effect of anomalous dispersion on the measurement target M is observed. On the other hand, the reflection spectrum is mainly obtained in the second frequency domain adjacent to the first frequency domain.

The adjuster 123 includes an incidence angle adjuster 123a and an exit angle adjuster 123b. The incidence angle adjuster 123a includes any appropriate adjusting agent. The refractive index, shape, and arrangement of the adjusting agent are determined so that, for example, the electromagnetic waves irradiated by the generator 121 are incident on the interface between the first adherend A and the measurement target M at the critical angle or higher in the first frequency domain. Similarly, the exit angle adjuster 123b includes any appropriate adjusting agent. The refractive index, shape, and arrangement of the adjusting agent are determined so that, for example, the electromagnetic waves totally reflected at the interface between the first adherend A and the measurement target M are incident on the receiver 122.

The tires 124 include any tire structure that can improve the portability of the measurement apparatus 10.

The control module 11 includes a data processor 111, a calculator 112, a command analyzer 113, a spectrum analyzer 114, and a generator/receiver controller 115. The data processor 111, the calculator 112, the command analyzer 113, the spectrum analyzer 114, and/or the generator/receiver controller 115 may together form one controller 116. In addition to the controller 116, the control module 11 includes a storage 117.

The controller 116 includes one or more processors. The "processor" in an embodiment is a general purpose processor or a dedicated processor specialized for particular processing, but these examples are not limiting. The controller 116 is communicably connected with each component of the measurement apparatus 10 and controls operations of the measurement apparatus 10 overall.

The storage 117 includes any storage module, such as a hard disk drive (HDD), a solid state drive (SSD), an electrically erasable programmable read-only memory (EEPROM), a read-only memory (ROM), and a random access memory (RAM). The storage 117 may, for example, function as a main memory, an auxiliary memory, or a cache memory. The storage 117 stores any information used for operations of the measurement apparatus 10.

For example, the storage 117 stores the below-described reference data necessary for calculating the state of the measurement target M. For example, the storage 117 stores information, acquired using the measurement module 12, on the spectroscopic spectrum of the measurement target M. For example, the storage 117 stores information on the state of the measurement target M calculated by the controller 116. For example, the storage 117 may store a system program, an application program, and the like. The storage 117 is not limited to being internal to the control module 11 and may include an external storage module connected through a digital input/output port, such as universal serial bus (USB).

For example, the measurement apparatus 10 is arranged on the first adherend A by the user at a position directly above the adhesive interface point where the measurement is actually performed on the measurement target M. The terminal apparatus 20 accepts input operations from the user and transmits commands, including measurement execution commands, to the measurement apparatus 10.

The data processor 111 of the measurement apparatus 10 receives the commands transmitted from the terminal apparatus 20 and outputs the commands to the command analyzer 113. The command analyzer 113 analyzes the content of the commands transmitted from the terminal apparatus 20. In a command packet, reference data is stored together with the measurement execution command. Such reference data is stored in the storage 117, for example.

In the present embodiment, the "reference data" includes, for example, reference data for the first adherend A, reference data for the measurement target M, and reference data for foreign substances. In the present embodiment, the "reference data for the first adherend A" includes, for example, the frequency characteristics of the refractive index and the frequency characteristics of the absorption coefficient of the first adherend A, along with a reference transmission spectrum indicating the absorbance per unit thickness.

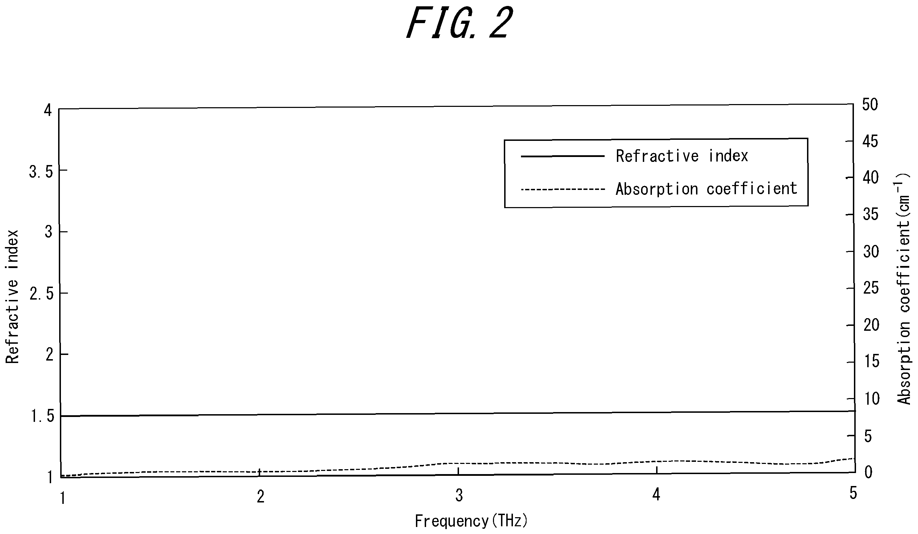

FIG. 2 is a graph illustrating an example of the frequency characteristics of the refractive index and the frequency characteristics of the absorption coefficient of the first adherend A. As illustrated in FIG. 2, the frequency characteristics of the refractive index of the first adherend A may, for example, include the characteristic that the refractive index is 1.5 and is substantially uniform with respect to frequency. The frequency characteristics of the absorption coefficient of the first adherend A may, for example, include the characteristic that the absorption coefficient is several cm⁻¹ and is substantially uniform with respect to frequency.

In the present embodiment, the "reference data for the measurement target M" includes, for example, the frequency characteristics of the refractive index and the frequency characteristics of the absorption coefficient of the measurement target M when the contamination rate of a foreign substance is 0%, i.e., when no foreign substance is mixed in.

In the present embodiment, the "reference data for foreign substances" includes, for example, the frequency characteristics of the refractive index and the frequency characteristics of the absorption coefficient of foreign substances that enter the measurement target M near the interface between the first adherend A and the measurement target M.

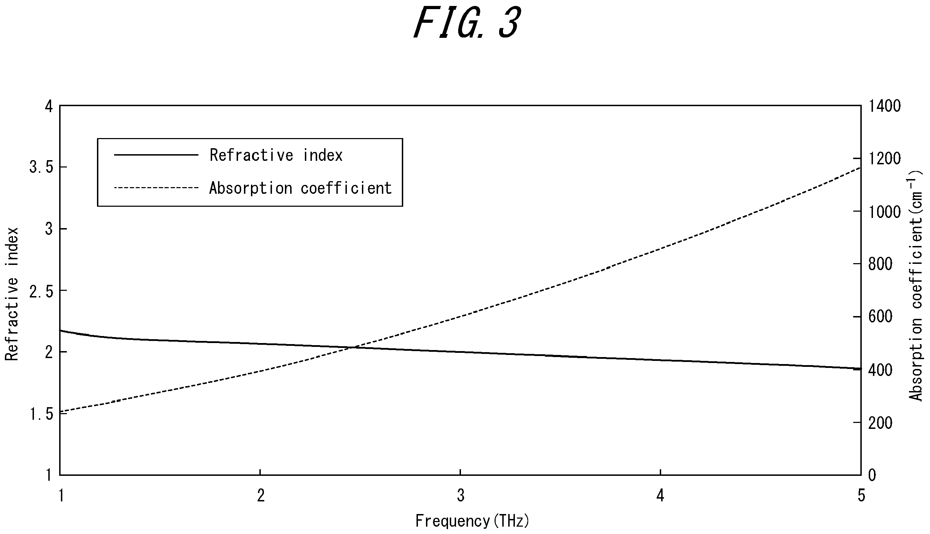

FIG. 3 is a graph illustrating an example of the frequency characteristics of the refractive index and the frequency characteristics of the absorption coefficient of a foreign substance. As illustrated in FIG. 3, the frequency characteristics of the refractive index of the foreign substance may, for example, include the characteristic that the refractive index decreases monotonically with increasing frequency in the vicinity of 2.0. The frequency characteristics of the absorption coefficient of the foreign substance may, for example, include the characteristic that the absorption coefficient increases monotonically with increasing frequency.

The generator/receiver controller 115 of the measurement apparatus 10 automatically adjusts the position and angle of the generator 121, based on the reference data for the first adherend A and the reference data for the measurement target, so that predetermined generation conditions are satisfied. In the present embodiment, the "predetermined generation conditions" include, for example, the condition that the electromagnetic waves irradiated by the generator 121 are incident on the interface between the first adherend A and the measurement target M at the critical angle or higher in the first frequency domain. This example is not limiting, and the generator/receiver controller 115 may adjust the position and angle of the generator 121 based on setting values inputted by the user using the terminal apparatus 20 and transmitted from the terminal apparatus 20.

The generator/receiver controller 115 of the measurement apparatus 10 automatically adjusts the position and angle of the receiver 122, based on the reference data for the first adherend A and the reference data for the measurement target, so that predetermined reception conditions are satisfied. In the present embodiment, the "predetermined reception conditions" include, for example, the condition that the electromagnetic waves totally reflected at the interface between the first adherend A and the measurement target M are incident on the receiver 122. This example is not limiting, and the generator/receiver controller 115 may adjust the position and angle of the receiver 122 based on setting values inputted by the user using the terminal apparatus 20 and transmitted from the terminal apparatus 20.

The generator/receiver controller 115 controls the generator 121 to irradiate electromagnetic waves in the terahertz band on the measurement target M. The generator/receiver controller 115 acquires information on the spectroscopic spectrum of the measurement target M from the receiver 122.

The generator/receiver controller 115 outputs the acquired information on the spectroscopic spectrum of the measurement target M to the spectrum analyzer 114. The spectrum analyzer 114 calculates the spectroscopic spectrum in the frequency domain by, for example, executing a Fourier transform process on the time waveform based on the information on the spectroscopic spectrum of the measurement target M.

The calculator 112 calculates the state of the measurement target M as described below, using the spectroscopic spectrum calculated by the spectrum analyzer 114 and the reference data stored in advance in the storage 117 in advance. The data processor 111 transmits the results of calculation by the calculator 112 to the terminal apparatus 20. The terminal apparatus 20 displays the received calculation results to the user.

In a case in which a scanning range is specified, the control module 11 executes the same measurement process at each measurement point while using the tires 124 to move the measurement module 12.

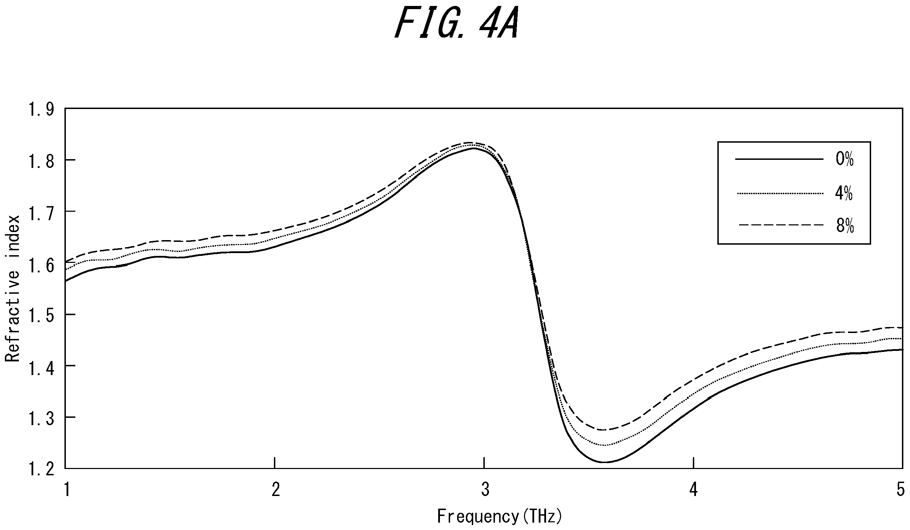

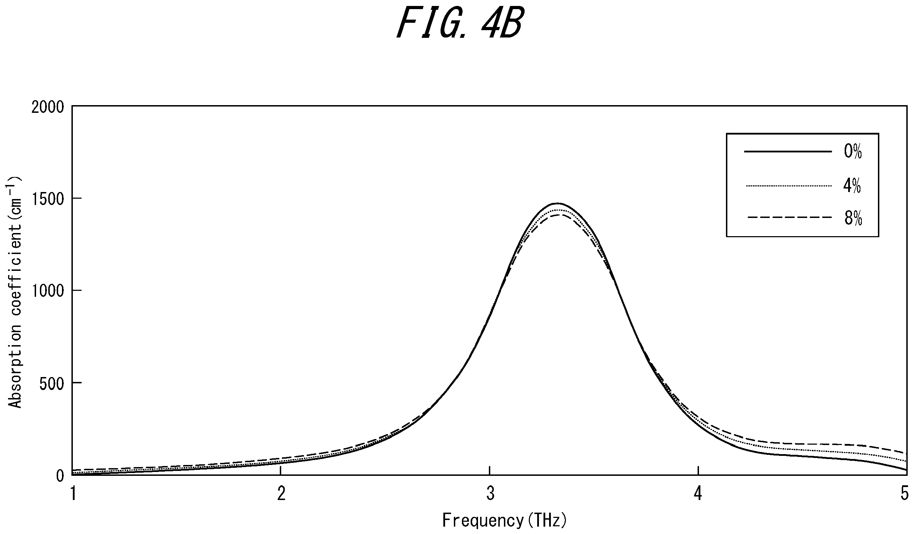

FIG. 4A is a graph that, for each contamination rate of a foreign substance, illustrates an example of the frequency characteristics of the refractive index of the measurement target M for which anomalous dispersion is observed. FIG. 4B is a graph that, for each contamination rate of a foreign substance, illustrates an example of the frequency characteristics of the absorption coefficient of the measurement target M for which anomalous dispersion is observed.

The solid line at a contamination rate of a foreign substance of 0% illustrates an example of the frequency characteristics of the refractive index when the additive is added so that anomalous dispersion is observed in the measurement target M. In this case, the anomalous dispersion is strongly observed at approximately 3.0 THz to 3.5 THz in the first frequency domain.

For example, assuming that distilled water is mixed with the measurement target M, consider the case in which a foreign substance, such that the refractive index and absorption coefficient in the frequency domain of 1 THz to 5 THz exhibit the frequency characteristics illustrated in FIG. 3, is mixed with the measurement target M. For example, the dotted line illustrates an example of the frequency characteristics of the refractive index and the frequency characteristics of the absorption coefficient when such a foreign substance is mixed into the measurement target M at a contamination rate of 4%. For example, the dashed line illustrates an example of the frequency characteristics of the refractive index and the frequency characteristics of the absorption coefficient when such a foreign substance is mixed into the measurement target M at a contamination rate of 8%.

The refractive index of the measurement target M decreases significantly at higher frequencies than 3.3 THz in the local first frequency domain in which anomalous dispersion occurs. Therefore, for example, the refractive index difference between the first adherend A, whose refractive index in the frequency domain of 1 THz to 5 THz is 1.5, as illustrated in FIG. 2, and the measurement target M becomes extremely large at higher frequencies than 3.3 THz.

The effect of the anomalous dispersion decreases as the frequency becomes even higher, and the refractive index of the measurement target M gradually increases. The effect of the anomalous dispersion decreases as the frequency becomes even higher, and a shift from the first frequency domain to the adjacent second frequency domain occurs. At this time, the refractive index difference between the first adherend A and the measurement target M becomes extremely small.

The absorption coefficient of the measurement target M peaks at a frequency position of approximately 3.3 THz in the local first frequency domain in which the anomalous dispersion occurs. The absorption coefficient of the measurement target M decreases significantly at lower and higher frequencies than approximately 3.3 THz.

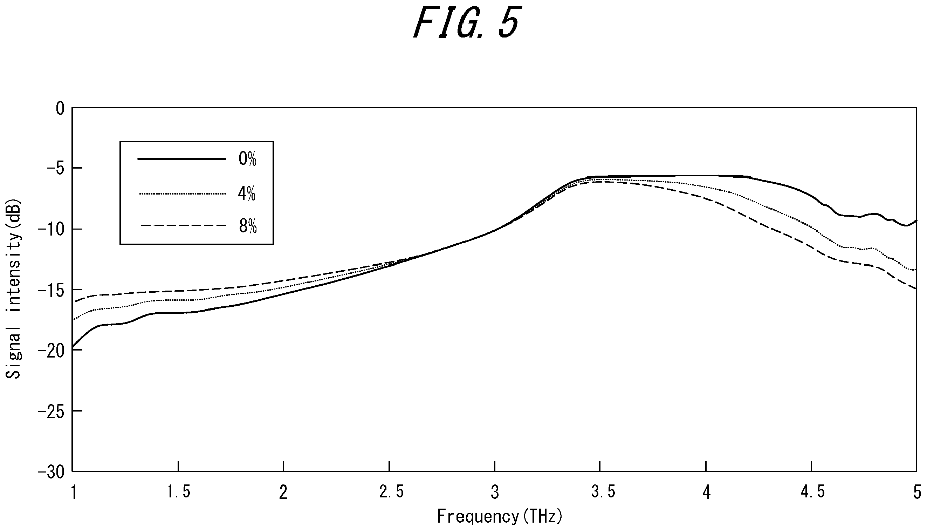

FIG. 5 is a graph illustrating an example of a simulation of the spectroscopic spectrum of the measurement target M obtained based on the frequency characteristics of the refractive index in FIG. 4A and the frequency characteristics of the absorption coefficient in FIG. 4B. As illustrated in FIG. 5, the spectroscopic spectrum of the measurement target M also changes according to the frequency characteristics of the refractive index and the frequency characteristics of the absorption coefficient, which change depending on the contamination rate of the foreign substance.

FIG. 5 illustrates an example of the spectroscopic spectrum, for each contamination rate of the foreign substance, calculated under the conditions that the angle of incidence from the first adherend A to the measurement target M is 70°, and the polarization of the incident electromagnetic waves is P polarization. In FIG. 5, it is assumed that the first adherend A is sufficiently thin, and that the absorption of electromagnetic waves is negligibly small when the electromagnetic waves penetrate the first adherend A. The reflection spectrum is obtained in a frequency domain lower than 3.3 THz for all the foreign substance contamination conditions.

On the other hand, an ATR spectrum is obtained in the frequency domain higher than 3.3 THz, which is included in the first frequency domain. Once the shift to the second frequency domain occurs, however, the reflectance at the interface decreases, and a reflection spectrum is again obtained. At this time, the frequency threshold varies greatly according to the contamination rate of the foreign substance.

In the present embodiment, the "frequency threshold" includes, for example, the value of a frequency included in a boundary region between the first frequency domain and the second frequency domain. For example, the frequency threshold includes the value of the frequency at which a predetermined intensity decay from the peak signal intensity is obtained in the spectroscopic spectrum. For example, the frequency threshold includes the value of the frequency at which the signal intensity is reduced by 3 dB from the peak signal intensity in the spectroscopic spectrum.

For example, when the contamination rate of the foreign substance is 0%, the frequency threshold is approximately 4.6 THz. For example, the first frequency domain includes a frequency domain lower than approximately 4.6 THz. For example, the second frequency domain includes a frequency domain higher than approximately 4.6 THz.

For example, when the contamination rate of the foreign substance is 4%, the frequency threshold is approximately 4.4 THz. For example, the first frequency domain includes a frequency domain lower than approximately 4.4 THz. For example, the second frequency domain includes a frequency domain higher than approximately 4.4 THz.

For example, when the contamination rate of the foreign substance is 8%, the frequency threshold is approximately 4.2 THz. For example, the first frequency domain includes a frequency domain lower than approximately 4.2 THz. For example, the second frequency domain includes a frequency domain higher than approximately 4.2 THz.

In the frequency domain in which the ATR spectrum is obtained, the absorption characteristics of the measurement target M are observed through evanescent light generated by total reflection. In the example illustrated in FIG. 5, in the frequency domain in which the ATR spectrum is obtained, the absorption of the electromagnetic waves by the measurement target M occurs at a magnitude of 5 dB or more.

In the example illustrated in FIG. 5, the refractive index of the measurement target M is high, and the refractive index difference between the measurement target M and the foreign substance is small, in the frequency domain of 2.5 THz to 3.0 THz. As a result, the change in the signal intensity of the spectroscopic spectrum due to the contamination rate of the foreign substance is small. Therefore, while monitoring the signal intensity in such a frequency domain, the control module 11 may detect changes in the angle of incidence and the exit angle and adjust the position and angle of the generator 121 and the receiver 122.

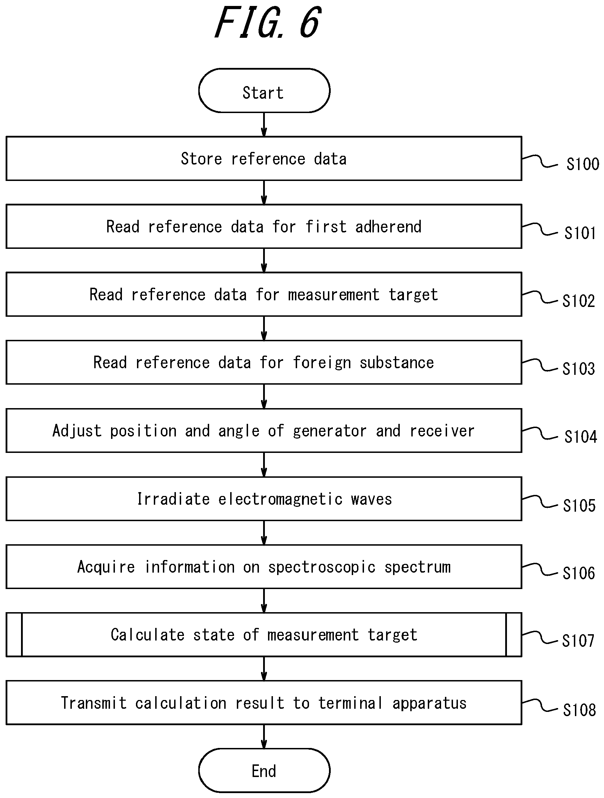

FIG. 6 is a flowchart illustrating a first example of operations of the measurement apparatus 10 in FIG. 1. With reference to FIG. 6, an example of the basic flow of the processing, executed by the controller 116 of the measurement apparatus 10, to measure the state of the measurement target M is described.

In step S100, the controller 116 acquires the reference data necessary for calculating the state of the measurement target M from the terminal apparatus 20 and stores the reference data in the storage 117.

In step S101, the controller 116 reads the reference data, stored in the storage 117 in step S100, for the first adherend A.

In step S102, the controller 116 reads the reference data, stored in the storage 117 in step S100, for the measurement target M.

In step S103, the controller 116 reads the reference data, stored in the storage 117 in step S100, for the foreign substance.

In step S104, the controller 116 automatically adjusts the position and angle of the generator 121 so that the predetermined generation conditions are satisfied. The controller 116 automatically adjusts the position and angle of the receiver 122 so that the predetermined reception conditions are satisfied.

In step S105, the controller 116 irradiates electromagnetic waves on the measurement target M using the generator 121 automatically adjusted in step S104.

In step S106, the controller 116 acquires information on the spectroscopic spectrum of the measurement target M, the spectroscopic spectrum being based on the electromagnetic waves irradiated in step S105 and including the first frequency domain in which the effect of anomalous dispersion is observed and the second frequency domain adjacent to the first frequency domain.

In step S107, the controller 116 calculates the state of the measurement target M based on the information on the spectroscopic spectrum acquired in step S106.

In step S108, the controller 116 transmits the calculation results obtained in step S107 to the terminal apparatus 20.

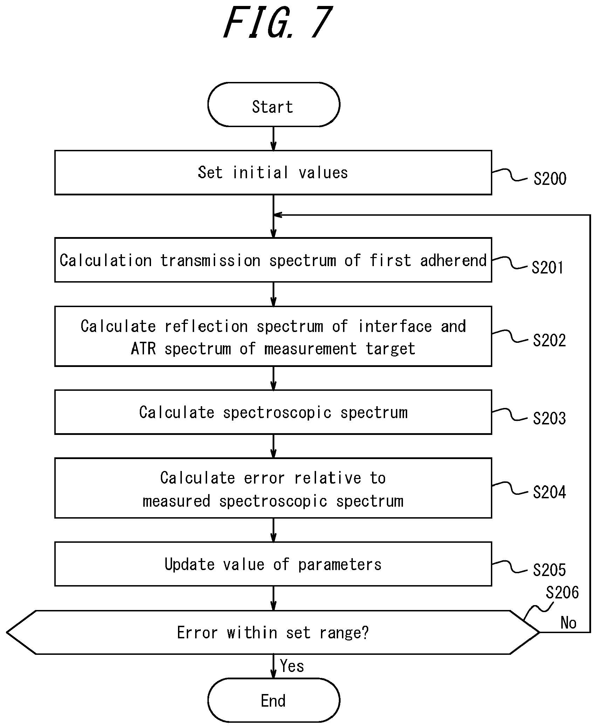

FIG. 7 is a flowchart illustrating a second example of operations of the measurement apparatus 10 in FIG. 1. The flowchart illustrated in FIG. 7 is an example of a more specific flow of the calculation process in step S107 of FIG. 6. With reference to FIG. 7, the calculation process in step S107 of FIG. 6 is described in more detail.

In the step of calculating the state of the measurement target M in step S107, the controller 116 executes a fitting calculation process, on the spectroscopic spectrum acquired in step S106, based on the reference data acquired in step S100 and the initial value of the state of the measurement target M.

In step S200, the controller 116 sets initial values for the parameters used in the fitting. The parameters used for fitting include the total distance t over which the electromagnetic waves penetrate the first adherend A, the state of the measurement target M, such as the contamination rate p of a foreign substance and the angle of incidence θ of the electromagnetic waves on the interface between the first adherend A and the measurement target M, and the like.

For example, at the time of actual measurement, the user may set the initial value of the total distance t by estimating the approximate value of the total distance t from the thickness of the first adherend A and the respective angles of the generator 121 and the receiver 122. For example, at the time of actual measurement, the user may set the initial value of the contamination rate p of a foreign substance by estimating the approximate value of the contamination rate p of the foreign substance from the usage conditions of the measurement target M, including the usage environment and usage period of the measurement target M, along with the user's own experience and the like. For example, if the curvature of the interface between the first adherend A and the measurement target M is small enough for the surface of the first adherend A and the interface to be considered parallel to each other, the user can, at the time of actual measurement, estimate the approximate value of the angle of incidence θ from the respective angles of the generator 121 and the receiver 122. Therefore, the user may set the initial value of the angle of incidence θ based on the value estimated in this way.

In step S201, the controller 116 calculates the transmission spectrum of the first adherend A. For example, the controller 116 calculates the transmission spectrum of the first adherend A based on the reference data for the first adherend A read from the storage 117 in step S101 of FIG. 6 and the total distance t set in step S200. For example, the controller 116 calculates the transmission spectrum of the first adherend A based on the reference transmission spectrum included in the reference data for the first adherend A and the total distance t.

The measured spectroscopic spectrum acquired in step S106 of FIG. 6 is affected by the absorption of electromagnetic waves based on the first adherend A. Therefore, the controller 116 uses the Lambert-Veil law to subtract the transmission spectrum of the first adherend A calculated in step S201 from the measured spectroscopic spectrum, thereby removing the effect of the absorption of electromagnetic waves based on the first adherend A.

In step S202, the controller 116 calculates the reflection spectrum of the interface between the first adherend A and the measurement target M. The controller 116 calculates the ATR spectrum of the measurement target M. For example, the controller 116 calculates the reflection spectrum of the interface and the ATR spectrum of the measurement target M based on each piece of reference data read from the storage 117 in steps S101 to S103 of FIG. 6, and the contamination rate p of the foreign substance and the angle of incidence θ set in step S200. At this time, the controller 116 uses the frequency characteristics of the refractive index and absorption coefficient included in the reference data for the first adherend A, the frequency characteristics of the refractive index and absorption coefficient included in the reference data for the measurement target M, and the frequency characteristics of the refractive index and absorption coefficient included in the reference data for the foreign substance. The absorption coefficient may be replaced by a vanishing coefficient, which corresponds to the imaginary part of the complex refractive index. The storage 117 may store each piece of reference data as complex refractive index data that combines the vanishing coefficient with the refractive index.

As illustrated in FIGS. 4A and 4B, when the contamination rate p of the foreign substance changes, the frequency characteristics of the refractive index and absorption coefficient of the measurement target M also change. If the frequency characteristics of the refractive index and absorption coefficient of the measurement target M change, the shape of the spectroscopic spectrum also changes, as illustrated in FIG. 5. Similarly, the shape of the spectroscopic spectrum changes depending on the angle of incidence θ.

For example, the reflection spectrum and the ATR spectrum during total reflection can be calculated based on the angle of incidence θ, the refractive index and absorption coefficient of the first adherend A, the refractive index and absorption coefficient of the measurement target M taking into account the contamination rate p of the foreign substance, and the Fresnel coefficient and Snell's law. For example, the refractive index and absorption coefficient of the measurement target M that takes into account the contamination rate p of the foreign substance can be calculated by taking into account the frequency characteristics of the refractive index and absorption coefficient of the foreign substance and the contamination rate p of the foreign substance in addition to the frequency characteristics of the refractive index and absorption coefficient of the measurement target M.

In step S203, the controller 116 calculates the spectroscopic spectrum of the measurement target M based on the reflection spectrum and ATR spectrum calculated in step S202.

In step S204, the controller 116 calculates the error between the spectroscopic spectrum calculated in step S203 and the measured spectroscopic spectrum acquired in step S106 of FIG. 6.

In step S205, based on the calculation results of step S204 and the direct method, the controller 116 updates the values of each parameter set in step S200.

In step S206, the controller 116 determines whether the error calculated in step S204 is within a set range. Upon determining that the error is within the set range, the controller 116 terminates the process. Upon determining that the error is not within the set range, the controller 116 executes the process of step S201 again.

The controller 116 calculates the frequency characteristics of the refractive index and absorption coefficient of the measurement target M when calculating each spectrum for the measurement target M in steps S202 and S203 of FIG. 7, for example.

The state of the measurement target M, such as the contamination rate of the foreign substance in the adhesive, is thus calculated. The fitting calculation process illustrated in FIG. 7 is executed in a state such that, for example, the respective types of the first adherend A, the measurement target M, and the foreign substance are identified when the measurement is actually performed. That is, in step S101 of FIG. 6, the controller 116 reads the reference data for a specific first adherend A. In step S102 of FIG. 6, the controller 116 reads the reference data for a specific measurement target M. In step S103 of FIG. 6, the controller 116 reads the reference data for a specific foreign substance.

This example is not limiting, and the fitting calculation process may be executed without identification of the type of the first adherend A, the measurement target M, and/or the foreign substance. For example, if the type of foreign substance is not identified when the measurement is actually performed, the controller 116 may, in step S103, read the reference data for all types of foreign substances stored in the storage 117. The controller 116 may execute the cycle of the fitting calculation processing illustrated in FIG. 7 for all types of foreign substances and determine the type of foreign substance with the smallest error as the type of foreign substance that was mixed into the measurement target M when the measurement was actually performed.

As described above, the controller 116 may identify the type of foreign substance mixed in the measurement target M in the fitting calculation process. A case in which the type of foreign substance has not been identified is described above as an example, but the same description applies to a case in which the type of either the first adherend A or the measurement target M has not been identified.

The controller 116 may compare the state of the measurement target M calculated according to the flow illustrated in FIGS. 6 and 7 with a predetermined threshold. When determining that the state of the measurement target M has reached the predetermined threshold, the controller 116 may determine that the measurement target M is abnormal. The controller 116 may transmit such a determination result to the terminal apparatus 20. The terminal apparatus 20 may display such a determination result to the user. This enables the user to easily understand that, for example, the contamination rate of the foreign substance in the measurement target M is high and that an abnormality has occurred in the measurement target M.

According to the above-described measurement apparatus 10 of the first embodiment, the state of the measurement target M can be accurately measured. For example, by acquiring information on a spectroscopic spectrum that includes a first frequency domain in which the effect of anomalous dispersion is observed and a second frequency domain adjacent to the first frequency domain, the measurement apparatus 10 can acquire a spectroscopic spectrum with shapes of different characteristics in each frequency domain. Additionally, the shape of the spectroscopic spectrum in each frequency domain changes according to the state of the measurement target M. Therefore, the measurement apparatus 10 can accurately measure the state of the measurement target M based on the spectroscopic spectrum of a measurement target M that includes such a mixed spectrum.

For example, as a result of the spectroscopic spectrum of the measurement target M including the ATR spectrum and the reflection spectrum, the reflection intensity at the interface between the first adherend A and the measurement target M increases. For example, as a result of the measurement target M exhibiting anomalous dispersion, the first frequency domain in which the refractive index difference between the first adherend A and the measurement target M increases is obtained. Due to this increase in the refractive index difference, the reflection intensity at the interface between the first adherend A and the measurement target M increases. The reflection intensity also increases due to the electromagnetic waves irradiated by the generator 121 being incident on the interface between the first adherend A and the measurement target M at the critical angle or higher. For these reasons, the signal strength of the detection signal outputted by the receiver 122 increases. This enables the controller 116 of the measurement apparatus 10 to accurately calculate the state of the measurement target M based on a spectroscopic spectrum with sufficient signal intensity.

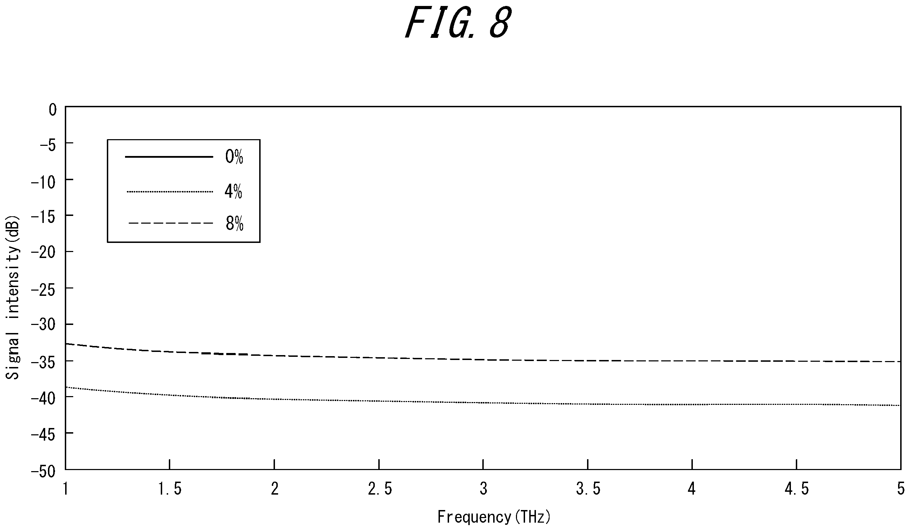

FIG. 8 is a first graph corresponding to FIG. 5 for use in a comparison with the present disclosure. The graph in FIG. 8 illustrates how the reflection spectrum for perpendicular incidence changes depending on the contamination rate of the foreign substance when the measurement target M is not doped with an additive and does not exhibit anomalous dispersion. As illustrated in FIG. 8, the reflection spectrum of the measurement target M also changes depending on the contamination rate of the foreign substance.

For example, in a case in which the refractive index and absorption coefficient of the measurement target M when the contamination rate of the foreign substance is 0% exhibit no anomalous dispersion and respectively have the same frequency characteristics as the refractive index and absorption coefficient of the first adherend A as illustrated in FIG. 2, the reflection spectrum will also be substantially flat. Since the refractive index difference and the absorption coefficient difference between the first adherend A and the measurement target M become zero over the entire frequency domain, no electromagnetic waves are reflected, and the signal intensity drops to an undetectable level.

When the contamination rate of the foreign substance is 4% and 8%, the refractive index of the measurement target M changes from 1.5, resulting in a refractive index difference between the first adherend A and the measurement target M. A reflection spectrum with a predetermined signal intensity is therefore obtained, as illustrated by the dotted and dashed lines in FIG. 8. However, since the refractive indices of the first adherend A and the measurement target M are uniform over the entire frequency domain, the reflection spectrum is substantially flat.

As described above, when the measurement target M does not exhibit anomalous dispersion and electromagnetic waves are perpendicularly incident, the signal intensity of the spectroscopic spectrum is extremely low compared to the present disclosure. For example, if the refractive index and absorption coefficient of the measurement target M are respectively the same as the refractive index and absorption coefficient of the first adherend A, electromagnetic waves are not reflected, making it difficult to obtain the spectroscopic spectrum in the first place.

In addition, as a result of the shape of the reflection spectrum being flat, without exhibiting any characteristics, it becomes difficult to distinguish, on the measured spectroscopic spectrum, between the effects of uniform power loss caused by the measurement apparatus 10 and the like and the effects of reflection. Furthermore, in a case in which the shape of the transmission spectrum of the first adherend A is also flat, it becomes difficult to distinguish, on the measured spectroscopic spectrum, between the reflection spectrum at the interface and the transmission spectrum of the first adherend A without accurately knowing the thickness of the first adherend A.

The signal intensity of the reflection spectrum improves by the angle of incidence of the electromagnetic waves onto the interface being increased, so that the electromagnetic waves are incident at an angle. However, since the refractive index difference between the first adherend A and the measurement target M is not as large as when the measurement target M exhibits anomalous dispersion, the signal intensity of the reflection spectrum is relatively lower. Additionally, even in such a case, the aforementioned problem caused by the flattening of the reflection spectrum is not eliminated.

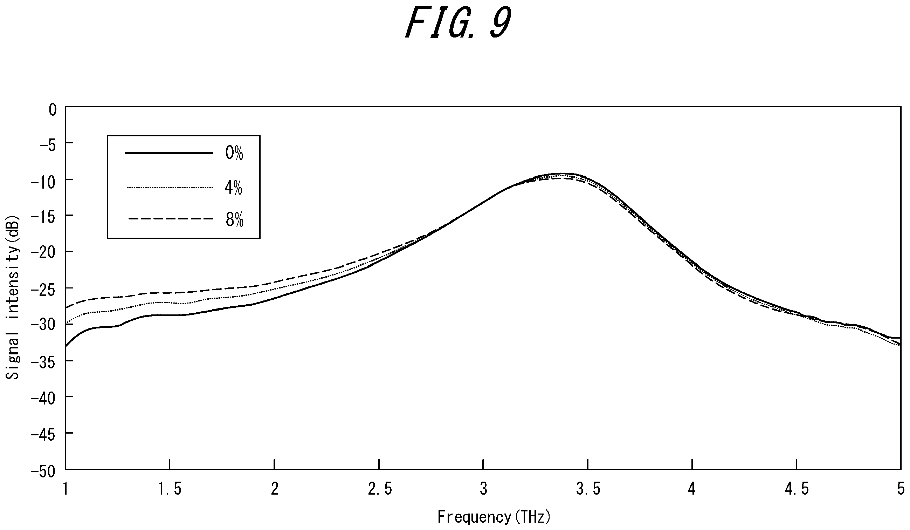

On the other hand, even when the measurement target M exhibits anomalous dispersion, the signal intensity of the reflection spectrum when electromagnetic waves are perpendicularly incident is relatively lower than in the present disclosure. FIG. 9 is a second graph corresponding to FIG. 5 for use in a comparison with the present disclosure. The graph in FIG. 9 illustrates how the reflection spectrum for perpendicular incidence changes depending on the contamination rate of the foreign substance when the measurement target M is doped with an additive and exhibits anomalous dispersion. As illustrated in FIG. 9, the reflection spectrum of the measurement target M also changes depending on the contamination rate of the foreign substance.

The reflection spectrum has a characteristic shape based on anomalous dispersion when the contamination rate of the foreign substance is 0%, 4%, and 8%, respectively. However, the frequency domain in which the effect of the change in the contamination rate of the foreign substance is significant is only the low frequency side from 1 THz to 2 THz. The reflection spectrum in such a frequency domain has an extremely low signal intensity compared to the signal intensity of the frequency domain that can be distinguished in the spectroscopic spectrum illustrated in FIG. 5 in the present disclosure.

If the process, described below in the second embodiment, to calculate the state of the measurement target M using the frequency threshold of the present disclosure were to be applied to such a reflection spectrum, it would be necessary to refer to the signal intensity around 1 THz, where the effect of changes in the contamination rate of the foreign substance is clearly visible, from the area around 3.3 THz, where the signal intensity is the highest. A measurement apparatus with a wide dynamic range would therefore be necessary. Theoretically, the contamination rate of the foreign substance can be calculated only from the absolute value of the signal intensity around 1 THz, but as in the case of FIG. 8, it is difficult to calculate the correct contamination rate of the foreign substance unless the thickness of the first adherend A is accurately known.

Unlike the case described above, when the measurement target M exhibits anomalous dispersion and electromagnetic waves are incident at the critical angle or higher, the measurement apparatus 10 according to the first embodiment can increase the signal intensity of the spectroscopic spectrum to measure the state of the measurement target M accurately.

The controller 116 of the measurement apparatus 10 calculates the state of the measurement target M by executing a fitting calculation process on the acquired spectroscopic spectrum. This configuration enables the controller 116 to accurately calculate the state of the measurement target M that best matches the shape of the acquired spectroscopic spectrum. In other words, the controller 116 can accurately calculate the state of the measurement target M that has the least error with respect to the shape of the acquired spectroscopic spectrum.

By the type of foreign substance mixed in the measurement target M being identified in the fitting calculation process, the measurement apparatus 10 can accurately measure the condition of the measurement target M even in the case in which the user cannot identify the type of foreign substance mixed in the measurement target M. In addition, the user can easily understand the type of foreign substance mixed in the measurement target M based on the results of the fitting calculation process by the measurement apparatus 10.

The controller 116 of the measurement apparatus 10 calculates the frequency characteristics of the refractive index and the absorption coefficient of the measurement target M in the fitting calculation process and can thereby accurately calculate the frequency characteristics of the refractive index and the absorption coefficient of the measurement target M corresponding to the shape of the acquired spectroscopic spectrum. Therefore, the user can easily understand the frequency characteristics of the refractive index and the absorption coefficient of the measurement target M based on the results of the fitting calculation process by the measurement apparatus 10.

By the state of the measurement target M including the contamination rate of the foreign substance in the adhesive, the measurement apparatus 10 can accurately measure the contamination rate of the foreign substance in the adhesive sandwiched between the first adherend A and the second adherend B. Generally, when a foreign substance, including water, silicone, and fluorinated compounds, enters the adhesive interface, the bond between the adherend and the adhesive is irreversibly broken, and the adhesive strength of the adhesive is reduced. Therefore, the user can view the terminal apparatus 20 to monitor the contamination rate, measured using the measurement apparatus 10, of the foreign substance relative to the adhesive and can take measures to control the contamination by the foreign substance as necessary before defects such as reduced adhesive strength occur.

In the measurement system 1 according to the first embodiment, the measurement apparatus 10 and the terminal apparatus 20 have been described as being separate apparatuses, but this configuration is not limiting. The measurement apparatus 10 and the terminal apparatus 20 may be integrally configured as a single apparatus.

In the first embodiment, the frequency characteristics of the refractive index and the frequency characteristics of the absorption coefficient have been described as being included in each piece of reference data, but this configuration is not limiting. If the absorption coefficients of the first adherend A, the measurement target M, and the foreign substance are small enough that the effect on the spectroscopic spectrum of absorption in these materials can be ignored, then only the refractive index, i.e., only the real part of the complex refractive index, may be used in the process of calculating the state of the measurement target M. In this case, the controller 116 need not calculate the frequency characteristics of the absorption coefficient of the measurement target M in the process of calculating the state of the measurement target M.

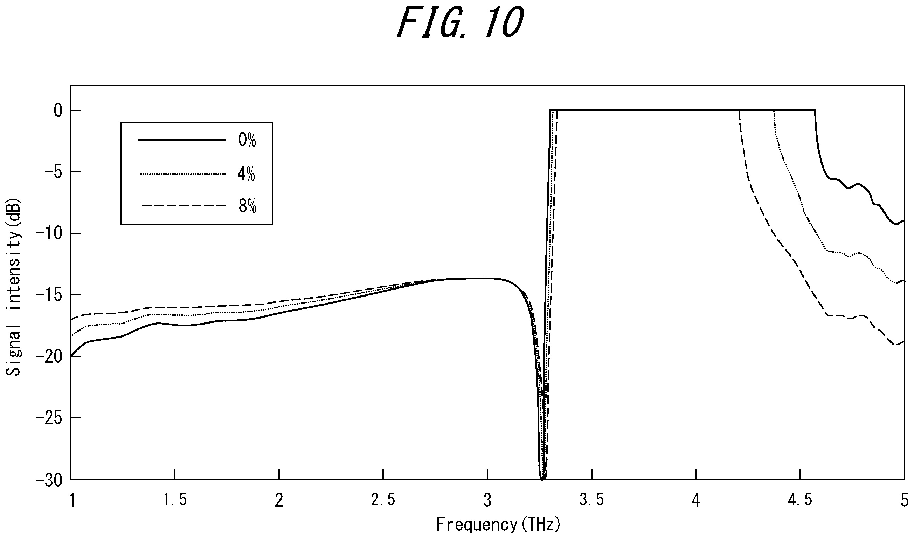

FIG. 10 is a graph illustrating an example of a simulation of the spectroscopic spectrum of a measurement target M obtained based only on the frequency characteristics of the refractive index in FIG. 4A.

Referring to FIG. 10, a reflection spectrum is obtained in a frequency domain lower than 3.3 THz for all of the contamination rates of the foreign substance. Near 3.3 THz, the signal intensity of the spectroscopic spectrum decays greatly. This is due to the fact that the refractive index difference between the first adherend A and the measurement target M is nearly zero, so that almost all of the electromagnetic waves irradiated from the generator 121 are transmitted through the interface without being reflected.

On the other hand, an ATR spectrum is obtained in the frequency domain higher than 3.3 THz, which is included in the first frequency domain. Once the shift to the second frequency domain occurs, however, the reflectance at the interface decreases, and a reflection spectrum is again obtained. At this time, the frequency threshold varies greatly according to the contamination rate of the foreign substance. For example, the frequency threshold includes the value of the frequency at which the signal intensity begins to decay from 0 dB, which is the peak in the spectroscopic spectrum.

For example, when the contamination rate of the foreign substance is 0%, the frequency threshold is approximately 4.6 THz. For example, the first frequency domain includes a frequency domain lower than approximately 4.6 THz. For example, the second frequency domain includes a frequency domain higher than approximately 4.6 THz.

For example, when the contamination rate of the foreign substance is 4%, the frequency threshold is approximately 4.4 THz. For example, the first frequency domain includes a frequency domain lower than approximately 4.4 THz. For example, the second frequency domain includes a frequency domain higher than approximately 4.4 THz.

For example, when the contamination rate of the foreign substance is 8%, the frequency threshold is approximately 4.2 THz. For example, the first frequency domain includes a frequency domain lower than approximately 4.2 THz. For example, the second frequency domain includes a frequency domain higher than approximately 4.2 THz.

In the first embodiment, the controller 116 has been described as calculating the frequency characteristics of the refractive index of the measurement target M in the process of calculating the state of the measurement target M, but this configuration is not limiting. The controller 116 need not calculate the frequency characteristics of the refractive index of the measurement target M, as long as the process of calculating the state of the measurement target M can be executed accurately.

In the first embodiment, the parameters used for fitting have been described as including the total distance t, the contamination rate p of a foreign substance, and the angle of incidence θ, but these examples are not limiting. It suffices for the parameters used for fitting to include at least the state of the measurement target M, such as the contamination rate p of a foreign substance.

In the first embodiment, the spectroscopic spectrum has been described as including the ATR spectrum and the reflection spectrum, but this configuration is not limiting. Instead of or in addition to these spectra, the spectroscopic spectrum may include a transmission spectrum in the first frequency domain in which the effect of anomalous dispersion is observed for the measurement target M.

In the first embodiment, the measurement target M has been described as including the adhesive that bonds the first adherend A to the second adherend B, but this configuration is not limiting. The measurement target M may include any target whose state can be calculated based on the information on the spectroscopic spectrum. For example, the measurement target M need not be sandwiched by the first adherend A and the second adherend B. For example, the measurement target M may include any solid, liquid, or gas target. For example, the measurement target M may include a liquid flowing in the pipe corresponding to the first adherend A. If a frequency domain exhibiting anomalous dispersion exists in such a liquid, the state of the measurement target M, including the concentration and alteration of the liquid, can be measured from outside of the pipe.

In the first embodiment, the electromagnetic waves irradiated by the generator 121 have been described as having a frequency within the terahertz region, but this example is not limiting. For example, the electromagnetic waves that are used are not limited to terahertz waves and may have a frequency within any region. For example, if the first adherend A is extremely thin, infrared light may be used. For example, millimeter waves may be used to detect moisture at the interface. In this way, the electromagnetic waves irradiated by the generator 121 may have a frequency corresponding to design changes according to the measurement target M.

In the first embodiment, the measurement module 12 of the measurement apparatus 10 has been described as including the adjuster 123, but this configuration is not limiting. The measurement module 12 need not include the adjuster 123 if the angle of incidence and the like of the electromagnetic waves can be adjusted based only on the generator 121 and the receiver 122.

In the first embodiment, using the frequency domain in which the refractive index of the first adherend A is larger than the refractive index of the measurement target M on the high frequency side of the anomalous dispersion, the total reflection at the interface between the first adherend A and the measurement target M is used, but this configuration is not limiting. For example, electromagnetic waves may be passed through using the frequency domain in which the refractive index of the first adherend A is smaller than the refractive index of the measurement target M on the low frequency side of the anomalous dispersion, and the total reflection at the interface between the second adherend B and the measurement target M may be used.

### (Second Embodiment)

The measurement apparatus 10 of the second embodiment calculates the state of the measurement target M using a different calculation method from the fitting calculation process. The other configurations, functions, effects, variations, and the like of the measurement system 1 including the measurement apparatus 10 are the same as those of the first embodiment, and the corresponding descriptions also apply to the measurement system 1 according to the second embodiment. Configurations that are the same as in the first embodiment are labeled below with the same reference signs, and a description thereof is omitted. The points that differ from the first embodiment will mainly be explained.

As described above using FIG. 5 or FIG. 10 in the first embodiment, the frequency threshold varies greatly depending on the contamination rate of the foreign substance in the measurement target M. In other words, if conditions such as the first adherend A and the angle of incidence do not change, the contamination rate of the foreign substance can be easily calculated based on the frequency threshold.

Therefore, in the second embodiment, the controller 116 of the measurement apparatus 10 calculates the state of the measurement target M by identifying the frequency threshold included in the boundary region between the first and second frequency domains in the acquired spectroscopic spectrum of the measurement target M.

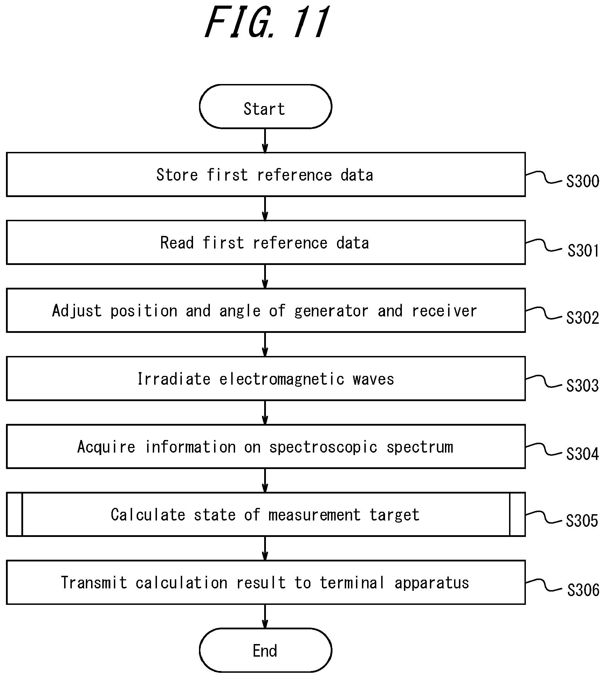

FIG. 11 is a flowchart illustrating a first example of operations of the measurement apparatus 10 according to the second embodiment of the present disclosure. With reference to FIG. 11, an example of the basic flow of the processing, executed by the controller 116 of the measurement apparatus 10, to measure the state of the measurement target M is described.

In step S300, the controller 116 acquires first reference data necessary for calculating the state of the measurement target M from the terminal apparatus 20 and stores the first reference data in the storage 117. In the present embodiment, the "first reference data" includes, for example, any data in which the state of the measurement target M and the frequency threshold are associated.

In step S301, the controller 116 reads the first reference data stored in the storage 117 in step S300.

In step S302, the controller 116 automatically adjusts the position and angle of the generator 121 so that the predetermined generation conditions are satisfied. The controller 116 automatically adjusts the position and angle of the receiver 122 so that the predetermined reception conditions are satisfied.

In step S303, the controller 116 irradiates electromagnetic waves on the measurement target M using the generator 121 automatically adjusted in step S302.

In step S304, the controller 116 acquires information on the spectroscopic spectrum of the measurement target M, the spectroscopic spectrum being based on the electromagnetic waves irradiated in step S303 and including the first frequency domain in which the effect of anomalous dispersion is observed and the second frequency domain adjacent to the first frequency domain.

In step S305, the controller 116 calculates the state of the measurement target M based on the information on the spectroscopic spectrum acquired in step S304.

In step S306, the controller 116 transmits the calculation results obtained in step S305 to the terminal apparatus 20.

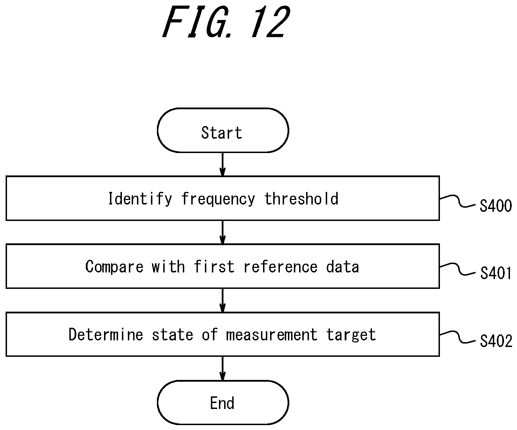

FIG. 12 is a flowchart illustrating a second example of operations of the measurement apparatus 10 according to the second embodiment of the present disclosure. The flowchart illustrated in FIG. 12 is an example of a more specific flow of the calculation process in step S305 of FIG. 11. With reference to FIG. 12, the calculation process in step S305 of FIG. 11 is described in more detail.

In step S400, the controller 116 identifies the frequency threshold included in the boundary region between the first frequency domain and the second frequency domain in the spectroscopic spectrum acquired in step S304 of FIG. 11.

The controller 116 may, for example, identify the value of the frequency exhibiting a decay of 3 dB from the peak signal intensity as the frequency threshold, as described using FIG. 5, in the spectroscopic spectrum acquired in step S304 of FIG. 11. The controller 116 may, for example, identify the value of the frequency at which the signal intensity begins to decay from a peak of 0 dB as the frequency threshold, as described using FIG. 10, in the spectroscopic spectrum acquired in step S304 of FIG. 11.

These examples are not limiting, and the controller 116 may, for example, identify the frequency threshold by acquiring the reference data as in the first embodiment, approximately calculating the reflection spectrum and the ATR spectra based on the acquired reference data, and comparing with the measured spectroscopic spectrum.

In step S401, the controller 116 compares the frequency threshold identified in step S400 with the first reference data read from the storage 117 in step S301 of FIG. 11.

In step S402, the controller 116 determines the state of the measurement target M based on the comparison results in step S401. For example, the controller 116 may determine the state of the measurement target M by reading, from the first reference data, the state of the measurement target M that conforms to the frequency threshold identified in step S400.

According to the above-described measurement apparatus 10 of the second embodiment, the same effects as those of the first embodiment are achieved. In addition, in the second embodiment, the measurement apparatus 10 can simplify the calculation process and easily measure the state of the measurement target M as a result of the state of the measurement target M being calculated based on the frequency threshold instead of the fitting calculation process. For example, as can be easily understood by comparing FIG. 7 and FIG. 12, the flow of the calculation process using the frequency threshold in the second embodiment has a smaller number of processing steps than the flow of the fitting calculation processing in the first embodiment. This enables the measurement apparatus 10 to reduce the time required for the calculation process as compared to the first embodiment. As a result, the convenience for users of the measurement apparatus 10 improves.

In the second embodiment, the state of the measurement target M has been described as being calculated based on one frequency threshold, but this configuration is not limiting. For example, depending on the frequency characteristics of the refractive index and the frequency characteristics of the absorption coefficient of the measurement target M and the contamination rate of the foreign substance, a plurality of frequency thresholds may be observed in the spectroscopic spectrum. In such a case, the controller 116 of the measurement apparatus 10 may identify the plurality of frequency thresholds and calculate the state of the measurement target M based on the plurality of frequency thresholds.

As illustrated in FIG. 5 or FIG. 10, the frequency at which the spectrum switches from the reflection spectrum to the ATR spectrum near 3.3 THz also theoretically depends on the contamination rate of the foreign substance. Therefore, instead of or in addition to the aforementioned frequency threshold, the state of the measurement target M may also be calculated by taking such a frequency into account.

### (Third Embodiment)

The measurement apparatus 10 of the third embodiment calculates the state of the measurement target M using a different calculation method from the fitting calculation process and the processing using the frequency threshold. The other configurations, functions, effects, variations, and the like of the measurement system 1 including the measurement apparatus 10 are the same as those of the first embodiment, and the corresponding descriptions also apply to the measurement system 1 according to the third embodiment. Configurations that are the same as in the first embodiment are labeled below with the same reference signs, and a description thereof is omitted. The points that differ from the first embodiment will mainly be explained.

As illustrated in FIG. 5 or FIG. 10 in the first embodiment, the signal intensity difference of the spectroscopic spectrum in the specific frequency domain extending from the first frequency domain to the second frequency domain varies greatly depending on the contamination rate of the foreign substance in the measurement target M. In the present embodiment, the "specific frequency domain" includes, for example, the frequency domain from 3.3 THz to 4.7 THz. In the present embodiment, the "signal intensity difference" includes, for example, the difference between the maximum and minimum values of the signal intensity in the specific frequency domain. In other words, if conditions such as the first adherend A and the angle of incidence do not change, the contamination rate of the foreign substance can be easily calculated based on the signal intensity difference in the specific frequency domain.

Therefore, in the third embodiment, the controller 116 of the measurement apparatus 10 calculates the state of the measurement target M by identifying the signal intensity difference in a specific frequency domain, extending from the first frequency domain to the second frequency domain, in the acquired spectroscopic spectrum of the measurement target M.

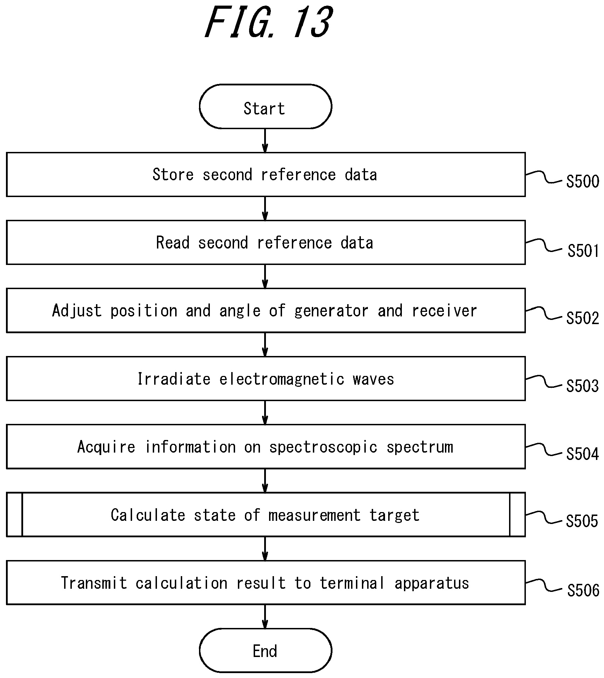

FIG. 13 is a flowchart illustrating a first example of operations of the measurement apparatus 10 according to the third embodiment of the present disclosure. With reference to FIG. 13, an example of the basic flow of the processing, executed by the controller 116 of the measurement apparatus 10, to measure the state of the measurement target M is described.

In step S500, the controller 116 acquires second reference data necessary for calculating the state of the measurement target M from the terminal apparatus 20 and stores the second reference data in the storage 117. In the present embodiment, the "second reference data" includes, for example, any data in which the state of the measurement target M and the signal intensity difference in a specific frequency domain are associated.

In step S501, the controller 116 reads the second reference data stored in the storage 117 in step S500.

In step S502, the controller 116 automatically adjusts the position and angle of the generator 121 so that the predetermined generation conditions are satisfied. The controller 116 automatically adjusts the position and angle of the receiver 122 so that the predetermined reception conditions are satisfied.

In step S503, the controller 116 irradiates electromagnetic waves on the measurement target M using the generator 121 automatically adjusted in step S502.

In step S504, the controller 116 acquires information on the spectroscopic spectrum of the measurement target M, the spectroscopic spectrum being based on the electromagnetic waves irradiated in step S503 and including the first frequency domain in which the effect of anomalous dispersion is observed and the second frequency domain adjacent to the first frequency domain.

In step S505, the controller 116 calculates the state of the measurement target M based on the information on the spectroscopic spectrum acquired in step S504.

In step S506, the controller 116 transmits the calculation results obtained in step S505 to the terminal apparatus 20.

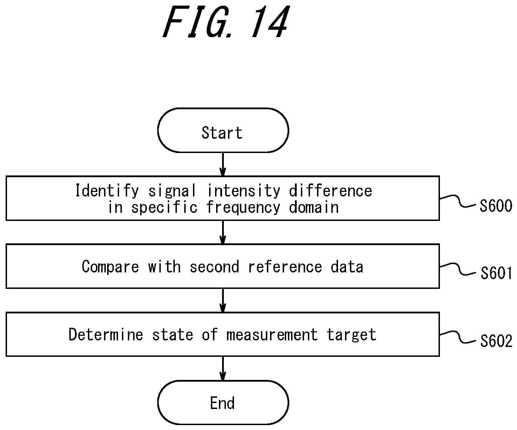

FIG. 14 is a flowchart illustrating a second example of operations of the measurement apparatus 10 according to the third embodiment of the present disclosure. The flowchart illustrated in FIG. 14 is an example of a more specific flow of the calculation process in step S505 of FIG. 13. With reference to FIG. 14, the calculation process in step S505 of FIG. 13 is described in more detail.

In step S600, the controller 116 identifies the signal intensity difference in a specific frequency domain in the spectroscopic spectrum acquired in step S504 of FIG. 13. For example, the controller 116 may identify the signal intensity difference in the specific frequency domain based on a spectroscopic spectrum such as the one illustrated in FIG. 5, which was acquired in step S504 of FIG. 13. For example, the controller 116 may identify the signal intensity difference in the specific frequency domain based on a spectroscopic spectrum such as the one illustrated in FIG. 10, which was acquired in step S504 of FIG. 13.

These examples are not limiting, and the controller 116 may, for example, identify the signal intensity difference in a specific frequency domain by acquiring the reference data as in the first embodiment, approximately calculating the reflection spectrum and the ATR spectra based on the acquired reference data, and comparing with the measured spectroscopic spectrum.

In step S601, the controller 116 compares the signal intensity difference in the specific frequency domain identified in step S600 with the second reference data read from the storage 117 in step S501 of FIG. 13.

In step S602, the controller 116 determines the state of the measurement target M based on the comparison results in step S601. For example, the controller 116 may determine the state of the measurement target M by reading, from the second reference data, the state of the measurement target M that conforms to the signal intensity difference in the specific frequency domain identified in step S600.

According to the above-described measurement apparatus 10 of the third embodiment, the same effects as those of the first embodiment are achieved. In addition, in the third embodiment, the measurement apparatus 10 can simplify the calculation process and easily measure the state of the measurement target M as a result of the state of the measurement target M being calculated based on the signal intensity difference in a specific frequency domain instead of the fitting calculation process. For example, as can be easily understood by comparing FIG. 7 and FIG. 14, the flow of the calculation process using the signal intensity difference in a specific frequency domain in the third embodiment has a smaller number of processing steps than the flow of the fitting calculation processing in the first embodiment. This enables the measurement apparatus 10 to reduce the time required for the calculation process as compared to the first embodiment. As a result, the convenience for users of the measurement apparatus 10 improves.

Although the present disclosure is based on embodiments and drawings, it is to be noted that various changes and modifications may be made by those skilled in the art based on the present disclosure. Therefore, such changes and modifications are to be understood as included within the scope of the present disclosure. For example, the functions and the like included in the components, steps, and the like may be reordered in any logically consistent way. Furthermore, components, steps, and the like may be combined into one or divided.

For example, the present disclosure may also be embodied as a program containing a description of the processing for achieving the functions of the above-described measurement apparatus 10 or a storage medium with the program recorded thereon. Such embodiments are also to be understood as falling within the scope of the present disclosure.

For example, the shape, arrangement, orientation, and number of the above-described components are not limited to the above explanation or the drawings. The shape, arrangement, orientation, and number of each component may be selected freely as long as the functions of the component can be achieved.

For example, the measurement apparatus 10 may execute only one of the calculation processes described in the above first embodiment, second embodiment, and third embodiment, or may execute two or more of the calculation processes independently or in parallel.

## Claims

1. A measurement apparatus for measuring a state of a measurement target that exhibits anomalous dispersion, the measurement apparatus comprising:
a controller configured to acquire information on a spectroscopic spectrum of the measurement target, the spectroscopic spectrum being based on electromagnetic waves that are irradiated on the measurement target and including a first frequency domain in which an effect of anomalous dispersion is observed and a second frequency domain adjacent to the first frequency domain, and calculate a state of the measurement target based on the acquired information on the spectroscopic spectrum.

2. The measurement apparatus of claim 1, wherein the controller calculates the state of the measurement target by executing a fitting calculation process on the acquired spectroscopic spectrum based on reference data necessary for calculating the state of the measurement target and an initial value of the state of the measurement target.

3. The measurement apparatus of claim 2, wherein in the fitting calculation process, the controller identifies a type of foreign substance that is mixed in the measurement target.

4. The measurement apparatus of any one of claims 1 to 3, wherein the controller calculates the state of the measurement target by identifying a frequency threshold included in a boundary region between the first frequency domain and the second frequency domain in the acquired spectroscopic spectrum.

5. The measurement apparatus of claim 4, wherein the frequency threshold includes a value of a frequency at which a predetermined intensity decay from a peak signal intensity is obtained in the spectroscopic spectrum.

6. The measurement apparatus of any one of claims 1 to 5, wherein the controller calculates the state of the measurement target by identifying a signal intensity difference in a specific frequency domain extending from the first frequency domain to the second frequency domain in the acquired spectroscopic spectrum.

7. The measurement apparatus of any one of claims 2 to 6, wherein in calculating the state of the measurement target, the controller calculates frequency characteristics of a refractive index of the measurement target.

8. The measurement apparatus of claim 7, wherein in calculating the state of the measurement target, the controller further calculates frequency characteristics of an absorption coefficient of the measurement target.

9. The measurement apparatus of any one of claims 1 to 8, wherein the spectroscopic spectrum includes an ATR spectrum, due to total reflection, obtained in the first frequency domain and a reflection spectrum obtained in the second frequency domain.

10. The measurement apparatus of any one of claims 1 to 9, wherein
the measurement target includes an adhesive that adheres a first adherend to a second adherend,
the state of the measurement target includes a contamination rate of a foreign substance in the adhesive, and
the measurement apparatus further comprises a generator configured to irradiate the electromagnetic waves having a frequency within a terahertz region on the adhesive.

11. A measurement method used to measure a state of a measurement target that exhibits anomalous dispersion, the measurement method comprising:
irradiating electromagnetic waves on the measurement target;
acquiring information on a spectroscopic spectrum of the measurement target, the spectroscopic spectrum being based on the irradiated electromagnetic waves and including a first frequency domain in which an effect of anomalous dispersion is observed and a second frequency domain adjacent to the first frequency domain; and
calculating a state of the measurement target based on the acquired information on the spectroscopic spectrum.

12. The measurement method of claim 11, further comprising:
acquiring reference data necessary for calculating the state of the measurement target, wherein
in the calculating of the state of the measurement target, a fitting calculation process is executed on the acquired spectroscopic spectrum based on the acquired reference data and an initial value of the state of the measurement target.

13. The measurement method of claim 11 or 12, wherein in the calculating of the state of the measurement target, a frequency threshold included in a boundary region between the first frequency domain and the second frequency domain in the acquired spectroscopic spectrum is identified.

14. The measurement method of any one of claims 11 to 13, wherein in the calculating of the state of the measurement target, a signal intensity difference in a specific frequency domain extending from the first frequency domain to the second frequency domain in the acquired spectroscopic spectrum is identified.
